# EUROPÄISCHE PATENTSCHRIFT

(11) **EP 1 878 205 B1**
(45) Veröffentlichungstag und Bekanntmachung des Hinweises auf die Patenterteilung: **14.10.2009**
(21) Anmeldenummer: 06725720.4
(22) Anmeldetag: 12.04.2006
(51) Int. Cl.: H04L 29/12

(54) **VERFAHREN UND VORRICHTUNG ZUR UMSETZUNG VON INTERNET-PROTOKOLL-ADRESSEN INNERHALB EINES KOMMUNIKATIONSNETZWERKES**
METHOD AND DEVICE FOR CONVERTING AN INTERNET PROTOCOL ADDRESS INSIDE A COMMUNICATIONS NETWORK
PROCEDE ET DISPOSITIF SERVANT A LA CONVERSION D'ADRESSES DE PROTOCOLE INTERNET A L'INTERIEUR D'UN RESEAU DE COMMUNICATION

(30) Priorität: 04.05.2005 DE 102005020924
(43) Veröffentlichungstag der Anmeldung: 16.01.2008
(73) Patentinhaber: Siemens Enterprise Communications GmbH & Co. KG, 81379 München (DE)
(72) Erfinder: LIEBE, Gerald, 15344 Strausberg (DE); VEITS, Oliver, 85221 Dachau (DE); KAUFFMANN, Martina, 10016 Beijing (CN); MÜLLER, Heribert, A-3730 Eggenburg (AT); TOTZKE, Jürgen, 85586 Poing (DE); FARTMANN, Alfons, 85748 Garching (DE); TIETSCH, Michael, 86916 Kaufering (DE); KLAGHOFER, Karl, 81373 München (DE)
(74) Vertreter: Fritzsche, Thomas
(86) Internationale Anmeldenummer: PCT/EP2006/061542
(87) Internationale Veröffentlichungsnummer: WO 2006/117284

(56) Entgegenhaltungen:
- EP-A- 1 318 649
- US-A1- 2002 101 859
- US-A1- 2002 138 622
- US-A1- 2003 161 295
- PAULSAMY V ET AL: "Network convergence and the NAT/firewall problems" SYSTEM SCIENCES, 2003. PROCEEDINGS OF THE 36TH ANNUAL HAWAII INTERNATIONAL CONFERENCE ON 6-9 JAN. 2003, PISCATAWAY, NJ, USA,IEEE, 6. Januar 2003 (2003-01-06), Seiten 152-161, XP010626483 ISBN: 0-7695-1874-5

## Beschreibung

Die Erfindung betrifft ein Verfahren nach dem Oberbegriff des Anspruchs 1.

Verfahren der in Rede stehenden Art werden heute in breitem Umfang zur Übermittlung von Sprach-, Audio-, Video- und/oder Nutzdaten über Netzwerkgrenzen, z. B. zwischen internen und öffentlichen Datennetzen, hinweg eingesetzt. Bei der Übermittlung von Daten über Internet-Protokoll-Netze (IP-Netze) treten immer wieder Probleme auf, wenn an einer Netzwerkgrenze eine Adressumsetzung mit Network Address Translation (NAT) erfolgt. NAT ist dabei aus verschiedenen Gründen von wesentlicher Bedeutung für die Internettechnologie. Unter anderem werden verschiedene Arten von Zugangssicherungen im Sinne einer Firewall sowie Fehlertoleranz und Hochverfügbarkeit unterstützt. Weiterhin werden grundlegende Funktionen der Netzwerkadministration vereinfacht.

Da der in den_Gründungs jahren des Internets vorgesehene Adressraum für die Vergabe von IP-Adressen auf absehbare Zeit nicht mehr ausreichen wird, insbesondere der Ausbau von internen und hochkomplexen Datennetzen mehr und mehr IP-Adressen erfordert, wird NAT aber vor allem eingesetzt, um die intern benutzten IP-Adressen nach außen zu verbergen. Dies macht zum einen die Verwaltung interner Netze einfacher, zum anderen werden Kosten gespart, da man nach außen weniger öffentliche kostenpflichtige IP-Adressen benutzen muss als dies intern erforderlich ist. So lassen sich eine Vielzahl von Endgeräten in einem internen Netzwerk auf eine einzige öffentliche IP-Adresse abbilden, indem die Portadresse der öffentlichen IP-Adresse variiert wird.

Bei NAT wird vor dem Versenden eines IP-Datenpaketes der IP-Header dieses Paketes modifiziert. Die interne IP-Adresse inklusive Portnummer wird durch eine öffentliche IP-Adresse mit einer anderen Portnummer ersetzt. Ein NAT-Host speichert die Zuordnung (Mapping) von interner IP-Adresse auf die öffentliche (externe) IP-Adresse. Empfängt nun der NAT-Host ein IP-Datenpaket, so bildet er die öffentliche (externe) IP-Adresse wieder auf die interne IP-Adresse ab. Der NAT-Host ist dabei als ein zwei Netzwerke miteinander verbindender Rechner zu verstehen, auf welchem eine entsprechende Software (NAT-Engine) für die Adressumsetzung sorgt.

Die Umsetzung der privaten IP-Adressen in öffentliche IP-Adressen ist sehr aufwändig und überfordert viele Kommunikationsprotokolle. Im Zusammenhang mit Voice over IP (VoIP) besteht zudem das Problem, dass der NAT-Host lediglich den IP-Header eines jeden VoIP-Datenpaketes durch Umsetzen der privaten IP-Adresse eines internen Clients in die entsprechende öffentliche IP-Adresse ändert, nicht aber die für die korrekte Zustellung notwendigen VoIP-Protokolldaten, insbesondere die private IP-Adresse im Nutzdaten-Teil des VoIP-Datenpaketes. Somit können die VoIP-Datenpakete des externen Clients nicht an den Zielclient zugestellt werden.

Es wurde schon vorgeschlagen, die Software in den Endgeräten (Clients) zu erweitern, so dass die Adressumsetzung per Look ahead-Mechanismus von einem NAT-Host unter Beibehaltung bestehender NAT-Konfigurationen vorgenommen werden kann (Patentanmeldung EP 1421766 A1). Das dort vorgestellte Verfahren erfordert jedoch eine sehr aufwändige softwareseitige Anpassung der Clients, die insbesondere Anwender im Heimbereich häufig überfordert.

Aus der US 2003/161295 A1 ist ein Verfahren zur Adressumsetzung in Voice over IP Netzwerken bekannt, bei der eine Vermittlungsstelle so ausgestaltet ist, dass diese einen speziell angepassten IP-Service-Switch enthält, welcher mehrere unabhängige Instanzen von Adressumsetzen unter Verwendung mehrer Tabellen enthält. Für jedes anzubindene private Netzwerk wird dabei jeweils eine Tabelle vorgehalten. Die Zuordnung zwischen öffentlichen und privaten Adressen wird dabei fest eingetragen und von einem jeweiligen Kunden administriert. Eine Abfrage des Servers ist nicht vorgesehen.

Aus der US 2002/0138622 A1 ist ein Verfahren zur Verwendung von langlebigen Adressen in einem privaten Netzwerk zur "Push"-Übermittlung von Nachrichten an mobile Endgeräte bekannt. Gemäß der dortigen Lehre wird eine Programmierschnittstelle eines Adressumsetzers benötigt, um statische Einträge programmieren zu können. Weiterhin wird ein Application Layer Gateway eingesetzt, welches eine Veränderung der Nutzdaten vornimmt.

Aus der EP 1318649 A1 ist ein weiterer Adressumsetzer bekannt, welcher in analoger Weise eine Programmierschnittstelle für ein Application Layer Gateway verwendet. Die oben genannten Einschränkungen gelten daher auch für diese Druckschrift.

Aufgabe der vorliegenden Erfindung ist es, ein Verfahren bereitzustellen, das die Umsetzung privater IP-Adressen in öffentliche IP-Adressen in einem Kommunikationsnetzwerk möglichst benutzungsfreundlich ohne softwaremäßige Anpassung der Clients ermöglicht.

Es ist weiterhin Aufgabe der vorliegenden Erfindung, eine Vorrichtung zur Durchführung des erfindungsgemäßen Verfahrens bereitzustellen.

Diese Aufgabe wird hinsichtlich des Verfahrens durch die Merkmale des Anspruchs 1 gelöst.

Vorteilhafte Ausgestaltungen und Weiterbildungen sind Gegenstand der abhängigen Ansprüche.

Ein Vorteil der vorliegenden Erfindung besteht darin, dass die VoIP-Software auf den Clients nicht für den Einsatz in Kommunikationsnetzwerken, die durch einen NAT-Host von öffentlichen Kommunikationsnetzwerken getrennt sind, angepasst werden müssen. Die Funktionalität der Adressumsetzung von privaten IP-Adressen in öffentliche IP-Adressen übernimmt ein zwischen privates und öffentliches Netzwerk geschaltetes Serversystem, z. B. ein Proxyserver oder vorzugsweise ein Gatekeeper. Dadurch werden in einem VoIP-Netzwerk NAT-Adressen zentral von diesem Proxyserver bzw. Gatekeeper vorab ausgehandelt und die privaten IP-Adressen, die in den VoIP-Protokolldaten jedes VoIP-Datenpaketes enthalten sind, in die entsprechenden öffentlichen IP-Adressen umgesetzt. Das Aushandeln geschieht über entsprechende Protokolle, unter deren Verwendung der Proxyserver einen NAT-Nameserver, vorzugsweise einen STUN (Simple traversal of UDP over NATs)-Server, kontaktiert. Durch die Verlagerung der Adressumsetzung auf das zwischengeschaltete Serversystem ist es nicht mehr notwendig, ein NAT-Aushandlungsprotokoll auf den Clients zu implementieren, die Clients bleiben damit unverändert. Die Umsetzung der IP-Adressen im Header jedes VoIP-Datenpaketes wird weiterhin von einem expliziten NAT-Host vorgenommen.

Ein weiterer Vorteil der vorliegenden Erfindung besteht darin, dass die Nutzung von VoIP-Applikationen für Anwender in Kommunikationsnetzwerken, die öffentliche und private IP-Adressen integrieren und daher auf NAT angewiesen sind, wesentlich vereinfacht wird. Bisher müssen Clients aufwändig konfiguriert werden bzw. es ist spezielle Software nötig, um auch in NAT-Umgebungen per VoIP kommunizieren zu können. Bisher konnten VoIP-Produkte daher nur von versierten Anwendern oder technischem Personal konfiguriert werden, während private Nutzer häufig mit der Konfiguration überfordert waren. Besonders schwierig gestaltet sich die Softwareanpassung in sogenannten "Embedded systems", in die - im Gegensatz zu Einzelplatzsystemen wie PCs - neue Software nur schwer zu integrieren ist. Insbesondere für derartige "Embedded systems" stellt die vorliegende Erfindung einen wesentlichen Vorteil dar.

Nachfolgend wird die Erfindung anhand eines Ausführungsbeispiels und mit Bezug auf die beiliegende Zeichnung näher erläutert. Dabei zeigt:

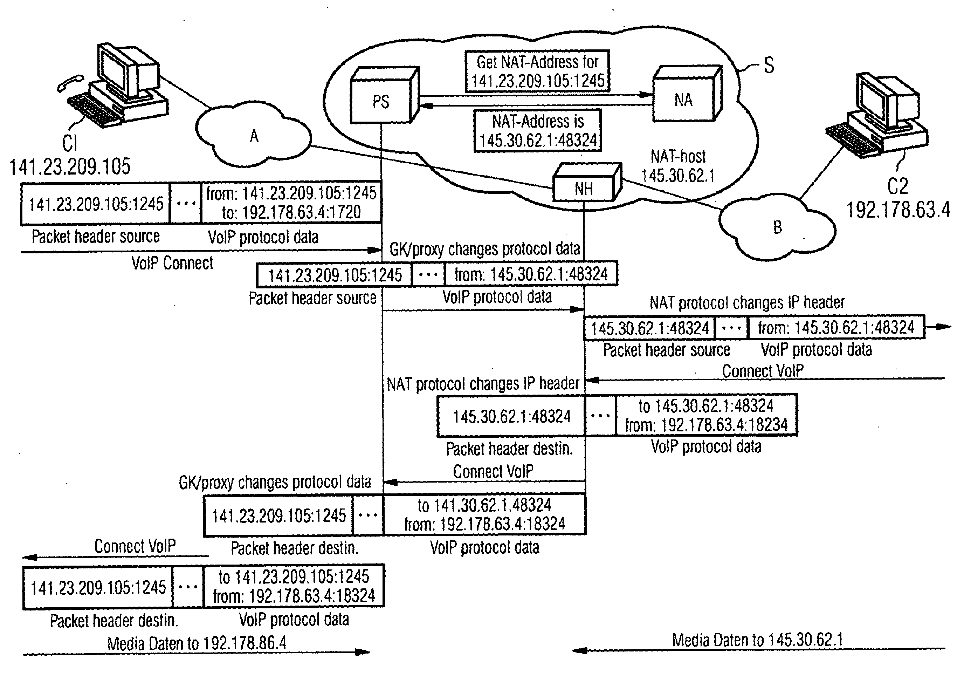

Figur 1: Adressumsetzung durch NAT in einem Kommunikationsnetzwerk

Figur 1 zeigt die erfindungsgemäße Umsetzung von privaten in öffentliche IP-Adressen in einem Kommunikationsnetzwerk, bestehend aus zwei Endgeräten (Clients) C1, C2, einem Serversystem S, einem Proxyserver (vorzugsweise Gatekeeper) PS, einem NAT-Adress-Server (vorzugsweise STUN-Server) NA, sowie einem NAT-Host NH. Das Kommunikationsnetzwerk teilt sich in einen privaten Bereich A und einen öffentlichen Bereich B, z. B. das öffentliche Internet, auf. An der Schnittstelle der beiden Kommunikationsnetzwerke A und B befindet sich der NAT-Host NH.Erfindungsgemäß ist der Proxyserver PS aktiv an der Adressumsetzung per NAT beteiligt. Im Folgenden ist ein beispielhafter Ablauf einer VoIP-Sitzung zwischen zwei Clients C1 und C2 in Hinblick auf die erfindungsgemäße Adressumsetzung dargestellt.

Client C1 mit der privaten IP-Adresse 141.23.209.105 startet einen Verbindungsaufbau für eine VoIP-Sitzung mit Client C2, dem die IP-Adresse 192.178.63.4 zugewiesen ist. Über das private Kommunikationsnetzwerk A erreicht die Verbindungsanfrage in Form eines VoIP-Datenpaketes V1 zunächst den Proxyserver PS. Das VoIP-Datenpaket V1 besteht aus einem Header, der die IP-Adresse des Absenders C1 enthält, sowie einem Nutzdaten-Teil, der die VoIP-Protokolldaten enthält. Die VoIP-Protokolldaten enthalten sowohl die IP-Adresse inklusive Portangabe des Absenders C1 (141.23.209.105:1245) als auch die IP-Adresse des Empfängers bzw. Clients C2 (192.178.63.4:1720). Da der Nutzdaten-Teil mit den VoIP-Protokolldaten vom NAT-Host NH unberührt bleibt, setzt nun zunächst der Proxyserver PS die private IP-Adresse des Clients C1 (141.23.209.105:1245) in die korrekte öffentliche IP-Adresse (145.30.62.1:48324) um. Zu diesem Zweck kontaktiert der Proxyserver PS einen NAT-Adress-Server NA und übermittelt die private IP-Adresse des Clients C1 inklusive Portangabe (141.23.209.105:1245). Der NAT-Adress-Server NA sendet daraufhin die entsprechende öffentliche IP-Adresse inklusive Portangabe für den Client C1 (145.30.62.1:48324) an den Proxyserver PS. Der Proxyserver PS ersetzt nun die private IP-Adresse des Clients C1 (141.23.209.105:1245) in den VoIP-Protokolldaten durch die korrekte öffentliche IP-Adresse (145.30.62.1:48324) und sendet das VoIP-Datenpaket V2 weiter an den NAT-Host NH. Der NAT-Host NH ersetzt nun im Header des VoIP-Datenpakets die private IP-Adresse des Absenders C1 (141.23.209.105:1245) durch die korrekte öffentliche IP-Adresse (145.30.62.1:48324) und sendet das VoIP-Datenpaket V3 an den Client C2. Aus den so modifizierten VoIP-Protokolldaten kann der Client C2 nun die korrekte öffentliche Adresse (145.30.62.1:48324) des anfragenden Clients C1 entnehmen und nun seinerseits eine entsprechende Antwort in Form eines VoIP-Datenpakets V4 an Client C1 zurücksenden. Das VoIP-Datenpaket V4 enthält im Header die öffentliche IP-Adresse des Empfängers C1 (145.30.62.1:48324). In den VoIP-Protokolldaten des VoIP-Datenpakets V4 ist als Empfänger ebenfalls die öffentliche IP-Adresse von C1 (145.30.62.1:48324) eingetragen. Das VoIP-Datenpaket V4 erreicht den NAT-Host NH, der die öffentliche IP-Adresse des Clients C1(195.30.62.1:48324) in die korrekte private IP-Adresse (141.23.209.105:1245) umsetzt und das so modifizierte VoIP-Datenpaket V5 weiter an den Client C1 sendet. Bevor das VoIP-Datenpaket V5 den Client C1 erreicht, werden die VoIP-Protokolldaten vom Proxyserver PS angepasst, indem der Proxyserver PS durch eine Anfrage an den NAT-Adress-Server NA anhand der öffentlichen IP-Adresse des Clients C1 (145.30.62.1:48324) die korrekte private IP-Adresse des Clients C1 (141.23.209.105:1245) ermittelt und die Empfängeradresse in VoIP-Protokolldaten entsprechend auf die korrekte private IP-Adresse des Clients C1 (141.23.209.105:1245) umsetzt. Anschließend sendet der Proxyserver PS das so modifizierte VoIP-Datenpaket weiter an den Client C1. Auf diese Weise wird erfolgreich eine VoIP-Sitzung eingeleitet. Zwischen den Clients C1 und C2 kann nun auf der Basis entsprechender Mediaprotokolle wie z. B. RTP oder RTCP eine direkte Kommunikationsverbindung aufgebaut werden. In Mediaprotokollen wie z. B. RTP werden IP-Adressen ausschließlich im Header übermittelt. Die eigentlichen Mediaprotokolldaten enthalten keine IP-Adressen, so dass diese auch nicht angepasst werden müssen, wenn im weiteren Verlauf der VoIP-Sitzung Mediadaten zwischen den Clients C1 und C2 über NAT-Grenzen hinweg ausgetauscht werden.

Neben dem oben dargestellten Szenario, wie es in Figur 1 dargestellt ist, ist es ebenso denkbar, dass Client C2 eine VoIP-Sitzung initiiert. In diesem Fall ist es lediglich erforderlich, dass Client C1 seine öffentliche IP-Adresse kennt und diese Client C2 in geeigneter Weise (z. B. per E-Mail) mitteilt, um einen Verbindungsaufbau zu ermöglichen. Der weitere Ablauf des VoIP-Sitzungsaufbaus ist analog zum oben dargestellten Szenario.

Weiterhin ist ein erweitertes Szenario denkbar, im dem sich sowohl Client C1 als auch Client C2 in einem privaten und durch jeweils einen NAT-Host von anderen Kommunikationsnetzwerken getrennten Kommunikationsnetzwerk befinden. In diesem Fall ist es vor dem eigentlichen VoIP-Sitzungsaufbau erforderlich, dass jeder der beiden dann beteiligten Proxyserver die öffentliche IP-Adresse des jeweils anderen Proxyservers kennt und diese dem jeweils externen Client in geeigneter Weise mitteilt.

## Patentansprüche

1. Verfahren zur Umsetzung von Internet-Protokoll-Adressen innerhalb eines Kommunikationsnetzwerkes,
- bei dem Internet-Protokoll-Datenpakete zwischen den Kommunikationseinrichtungen (C1, C2, NA, NH, PS) vermittelt werden,
- bei dem das Kommunikationsnetzwerk in ein öffentliches Kommunikationsnetzwerk (B) und mindestens ein privates Kommunikationsnetzwerk (A) aufgeteilt ist,
- bei dem jeder Kommunikationseinrichtung (C1, C2, NA, NH, PS) im Kommunikationsnetzwerk eine eindeutige öffentliche Internet-Protokoll-Adresse zugeordnet ist,
- bei dem ein Serversystem (S), die Kommunikation zwischen den Endgeräten (C1, C2) im Kommunikationsnetzwerk vermittelt,
- bei dem jedem Endgerät (C1, C2) in einem privaten Kommunikationsnetzwerk (A) durch das Serversystem (S) eine private Internet-Protokoll-Adresse zugeordnet wird,
- bei dem die jeweilige Umsetzung zwischen privaten und öffentlichen Internet-Protokoll-Adressen durch Network Address Translation vorgenommen wird,
**dadurch gekennzeichnet, dass** das Serversystem aus einem Proxyserver (Ps), einem NAT-Adress Server (NA) und einem NAT-Host (NH) besteht,
- seitens des Proxyservers (PS) eine jeweilige Umsetzung der in den Nutzdaten der Internet-Protokoll-Datenpakete enthaltenen privaten Internet-Protokoll-Adresse eines Endgeräts (C1, C2) und einer zugehörigen durch den Proxyserver (PS) vom NAT-Adress-Server (NA) bezogenen öffentlichen Internet-Protokoll-Adresse erfolgt
- und anschließend seitens des NAT-Host (NH)eine jeweilige Umsetzung zwischen der im Header der Internet-Protokoll-Datenpakete enthaltenen privaten Internet-Protokoll-Adresse und der öffentlichen Internet-Protokoll-Adresse eines Endgeräts (C1, C2) durch Network Address Translation vorgenommen wird.

2. Verfahren nach Anspruch 1,
**dadurch gekennzeichnet, dass** es sich bei den Internet-Protokoll-Datenpaketen um Voice over IP-Datenpakete handelt.

3. Verfahren nach einem der vorherigen Ansprüche,
**dadurch gekennzeichnet, dass** der NAT-Adress-Server (NA) als "Simple traversal of UDP over NATs" (kurz STUN)-Server ausgestaltet ist.

## Claims

1. Method for converting internet protocol addresses inside a communications network,
- where internet protocol data packets are switched between the communications devices (C1, C2, NA, NH, PS),
- where the communications network is divided into a public communications network (B) and at least one private communications network (A),
- where an unambiguous public internet protocol address is assigned to each communications device (C1, C2, NA, NH, PS) in the communications network,
- where a server system (S) switches the communication between the terminals (C1, C2) in the communication network,
- where a private internet protocol address is assigned to each terminal (C1, C2) in a private communications network (A) by the server system (S),
- where the respective conversion between private and public internet protocol addresses is performed by means of Network Address Translation, **characterized in that**
- the server system comprises a proxy server (PS), a NAT address server (NA) and an NAT host (NH),
- on the part of the proxy server (PS), a respective conversion of the private internet protocol address of a terminal (C1, C2) contained in the useful data of the internet protocol data packets and of an associated public internet protocol address obtained from the NAT address server (NA) by the proxy server (PS) is effected
- and then on the part of the NAT host (NH), a respective conversion between the private internet protocol address contained in the header of the internet protocol data packets and the public internet protocol address of a terminal (C1, C2) is performed by Network Address Translation.

2. Method according to Claim 1, **characterized in that** the internet protocol data packets are Voice-over IP data packets.

3. Method according to one of the preceding Claims, **characterized in that** the NAT address server (NA) is in the form of a "Simple Traversal of UDP over NATs".

## Revendications

1. Procédé servant à la conversion d'adresses de protocole Internet dans un réseau de communication,
- avec lequel les paquets de données de protocole Internet sont transmis entre les dispositifs de communication (C1, C2, NA, NH, PS),
- avec lequel le réseau de communication est divisé en un réseau de communication public (B) et au moins un réseau de communication privé (A),
- avec lequel une adresse de protocole Internet publique unique est attribuée à chaque dispositif de communication (C1, C2, NA, NH, PS) dans le réseau de communication,
- avec lequel un système serveur (S) transmet la communication entre les appareils terminaux (C1, C2) dans le réseau de communication,
- avec lequel une adresse de protocole Internet privée est attribuée à chaque appareil terminal (C1, C2) dans un réseau de communication privé (A) par le système serveur (S),
- avec lequel la conversion respective entre des adresses de protocole Internet publiques et privées est réalisée par la technique Traduction d'adresse de réseau (NAT),
**caractérisé en ce que**
- le système serveur se compose d'un serveur mandataire (PS), d'un serveur d'adresse NAT (NA) et d'un hôte NAT (NH)
- au niveau du serveur mandataire (PS) est effectuée une conversion respective de l'adresse de protocole Internet privée d'un appareil terminal (C1, C2) contenue dans les données utiles des paquets de données de protocole Internet et d'une adresse de protocole Internet publique relative à un serveur d'adresse NAT (NA) associé par le serveur mandataire (PS)
- et ensuite, au niveau de l'hôte NAT (NH), une conversion respective entre l'adresse de protocole Internet privée contenue dans l'en-tête des paquets de données de protocole Internet et l'adresse de protocole Internet publique d'un appareil terminal (C1, C2) est réalisée par le biais de la technique Traduction d'adresse de réseau.

2. Procédé selon la revendication 1, **caractérisé en ce que** les paquets de données de protocole Internet sont des paquets de données Voix sur IP.

3. Procédé selon l'une quelconque des revendications précédentes, **caractérisé en ce que** le serveur d'adresse NAT (NA) est conçu sous forme de serveur STUN (traversée simple de UDP à travers les NAT).
